(19) Europäisches Patentamt / European Patent Office / Office européen des brevets

(11) **EP 2 615 867 B1**

(12) **EUROPEAN PATENT SPECIFICATION**

(45) Date of publication and mention
of the grant of the patent:
**15.01.2014 Bulletin 2014/03**

(51) Int Cl.:
*H04W 48/04* (2009.01)       *H04W 52/28* (2009.01)

(21) Application number: **12305041.1**

(22) Date of filing: **12.01.2012**

(54) **Method for selecting a transmission mode, mobile station, network node, and communication network thereof**

Verfahren zur Auswahl eines Übertragungsmodus, Mobilstation, Netzwerkknoten und Kommunikationsnetzwerk dafür

Procédé de sélection d'un mode de transmission, station mobile, noeud de réseau et son réseau de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2013 Bulletin 2013/29**

(73) Proprietor: **Alcatel Lucent**
**75007 Paris (FR)**

(72) Inventors:
• **Wild, Thorsten**
  **70435 Stuttgart (DE)**
• **Weber, Andreas**
  **74251 Lehrensteinsfeld (DE)**
• **Doetsch, Uwe**
  **74392 Freudental (DE)**

(74) Representative: **Wetzel, Emmanuelle et al**
  **Alcatel-Lucent Deutschland AG**
  **Intellectual Property & Corporate Standards**
  **Lorenzstrasse 10**
  **70435 Stuttgart (DE)**

(56) References cited:
**EP-A2- 0 831 414      US-A1- 2011 256 884**
**US-B1- 6 201 973      US-B1- 6 643 517**

**Description**

**FIELD OF THE INVENTION**

The invention relates to radio communication and, more particularly but not exclusively, to selecting transmission modes in a radio communication system.

**BACKGROUND**

Radio communication systems provide users of mobile stations connectivity nearly everywhere and at every time. This connectivity is provided by radio frequency signals, which are transmitted from antenna systems of a radio communication system to a mobile station owned by the user and which are transmitted from the mobile station to the antenna systems of the radio communication system.

Power density of the radio frequency signals is largest at a location of an antenna system, which transmits the radio frequency signals. A high power density from such an antenna system may disturb electronic devices, which are not sufficient shielded against external radio frequency signals. If for example a user picks up his or her mobile station to a hospital and the user is located inside a building of the hospital, the mobile station might transmit radio frequency signals with a maximum transmission power because of the shielding effects of the walls of the building to reach a base station of the radio communication system. The power density of the radio frequency signals may disturb electronic devices, which are indispensable to life.

Even it has not been proven besides small temperature effects, that radio frequency signals as applied during radio communication may damage a human body users of a mobile station are more and more sensitive on the exposure of electromagnetic radiation, which is generated by their mobile stations.

If radio frequency signals are transmitted by a mobile station with a large power density, a power supply of the mobile station such as a battery or an accumulator needs to be exchanged or recharged earlier in comparison to a transmission of radio frequency signals with less power density.

US 6,643,517 B1 describes a method to protect against improper operation of mobile radios, e.g. cellular phones, by making use of a location technique and knowledge of the mobile's location to determine if the mobile is inside a protected region and thus needs to constrain operation. When the mobile radio is inside the protected region, the mobile radio operates in a constrained manner (e.g. with a low power operation) and when the mobile radio is not within the protected region, the mobile radio operates in a normal (unconstrained) manner.

**SUMMARY**

The way of transmitting radio frequency signals in a radio communication system has an impact on operation of electronic devices as well as on humans and animals and has a further impact on energy consumption. Therefore, it is an object of the invention to control and reduce these impacts.

The object is achieved by a method for selecting a transmission power mode at a mobile station for a transmission of radio frequency signals from the mobile station using a radio access technology. The method contains the steps of selecting at the mobile station one of two or more transmission power modes of the radio access technology for the transmission, transmitting selection information of the selected one of the two or more transmission power modes from the mobile station to a network node of a radio communication network, accepting or rejecting at the network node the selected one of the two or more transmission power modes, transmitting decision information from the network node to the mobile station, whether a selection of the selected one of the two or more transmission power modes is accepted or rejected, and transmitting from the mobile station the radio frequency signals using the selected one of the at least two transmission power modes or using a further transmission power mode as required by the network node.

The object is further achieved by a mobile station, by a network node, and by a communication network.

The selection of the two or more transmission modes may be provided via a user interface of the mobile station for example by a user dialogue box or a user configuration checkbox on a touchscreen of the mobile station.

The method offers a benefit of allowing users of mobile stations to influence themselves a transmission of radio frequency signals by their mobile stations. According to a preferred embodiment, the method may further contains the steps of transmitting selection information of the selected one of the two or more transmission modes from the mobile station to a network node of a radio communication network and accepting or rejecting at the network node the selected one of the two or more transmission modes.

The network node may be for example a base station of a cellular radio access network, an access point of a WLAN (WLAN = Wireless Local Area Network), a network controller such as an RNC (RNC = radio network controller) used in UMTS (UMTS = Universal Mobile Telecommunication Systems), an MME (MME = Mobility Management Entity) such as used in LTE (LTE = Long Term Evolution) or generally a network node for handling user profiles.

The preferred embodiment provides a benefit of allowing the radio communication network to reject or accept a transmission mode, which has been selected by the user. This further allows a network operator to keep main control about all operating conditions within the radio communication network.

According to two preferred embodiments, the two or more transmission modes may be selected by the mobile station via a user pre-selection of the one of the two or more transmission modes that is stored at the mobile station or the one of the two or more transmission modes may be selected by a user of the mobile station via a user interface of the mobile station. According a further preferred embodiment, the mobile station may contain a subscriber identity module and the user pre-selection may be stored on the subscriber identity module. This allows operators to advertise such a feature for their radio communication network and to sell subscriber identity modules, which are adapted to store such a user pre-selection.

According to an even further preferred embodiment, the mobile station may select the one of the two or more transmission modes based on a charging condition of a battery or an accumulator of the mobile station. This embodiments allows the mobile station for example to apply a transmission mode with a predefined transmission power below a maximum transmission power, even if the user of the mobile station has selected a different transmission mode for example with the maximum transmission power for maximizing a data throughput.

In another embodiment, the mobile station selects the one of the two or more transmission modes based on a comparison of a current location of the mobile station with a map of locations of predefined areas for reduced electromagnetic radiation. The current location of the mobile station may be determined for example by receiving positioning signals from a satellite positioning system at a receiver for such positioning signals such as a GPS receiver (GPS = Global Positioning System) of the mobile station. For this embodiment, the user of the mobile station may configure the mobile station, that the mobile station performs such a comparison and that the mobile station automatically selects a transmission mode, which is preferred by the user of the mobile station dependent on a location of the mobile station. The map may be updated and extended with further entries for example each time, the user makes manually a selection for a transmission mode at a new location, which is not stored in the map or the user makes manually a different selection than before at an already stored location. According to a further preferred embodiment, the method further may further contain the steps of adding via the user interface a further predefined area for reduced electromagnetic radiation or deleting via the user interface one of the two or more predefined areas for reduced electromagnetic radiation, and providing information of the added further predefined area or the deleted predefined area to a database, and updating the database with the information. An application server or a group of network nodes of a so-called network cloud may contain the database. The further preferred embodiment provides the advantage to store the predefined areas at the database. This will provide a central point for updating location-specific information (e.g. lists of hospitals and their position data) and thus saving signaling overhead (by avoiding the necessity to communicate those updates to the mobile) and storage memory space at the mobile. Additionally, the information isn't lost even if the mobile station will be stolen or is getting lost in another way. A download to the mobile station is not needed, when the network cloud is informed on the mobile user position data and can inform the network node (e.g. base station) in the case the mobile station is in a sensitive area, where a change of transmission modes is desirable. Otherwise, a collection of predefined areas for reduced electromagnetic radiation stored at the database can be downloaded to a further mobile station of the user or subscriber, so that the user or subscriber can use a same collection of predefined areas for reduced electromagnetic radiation at a new mobile station or that the user or subscriber can download the same collection of predefined areas for reduced electromagnetic radiation to different mobile stations, which are used by the user or the subscriber.

According to a further preferred embodiment, the first transmission mode may be a first transmission power mode for example with limited transmission power below a maximum transmission power and the second transmission mode may be a second transmission power mode for example with the maximum transmission power.

Preferably, the first transmission power mode may be defined by a first set of power control parameters such as a first so-called fractional path loss compensation factor, a first SINR target value (SINR = Signal to Interference-plus-Noise Ratio), etc. with a first maximum transmission power and the second power mode may be defined by a second set of power control parameters such as a second fractional path loss compensation factor, a second SINR target value, etc. with a second maximum transmission power larger than the first maximum transmission power.

Further preferable, the first transmission power mode is an eco mode for reduced electromagnetic radiation and/or the second transmission power mode is a high performance mode for maximizing a data throughput from the mobile station to the radio communication network.

According to an even further preferred embodiment the network node accepts or rejects the selected one of the two or more transmission modes based on a current location of the mobile station within a radio cell of the radio communication network or based on a current location of the mobile station within a predefined area labeled or not labeled as an area for reduced electromagnetic radiation.

In a further embodiment, the method may further contain the steps of transmitting a request from the network node to the database for transmitting information of at least one predefined area for reduced electromagnetic radiation preferably within a predefined distance to the current location of the mobile station, and transmitting from the database to the network node the information. Thereby, the network node is able to receive up to date information, whether it is recommended to apply a specific transmission mode such as the first transmission power mode for example with the limited transmission power below the maximum transmission power or the second transmission power mode for example with the maximum transmission power at the current location of the mobile station.

Alternatively, the mobile station or the network node such as a base station transmits mobile user position data to the network cloud and the network cloud transmits information of transmission mode restrictions to the network node in the case the mobile station is in a sensitive area, where a change of transmission modes is desirable. The transmission mode restrictions may be mandatory or optional for the network node.

Preferably, the method may further contain the steps of transmitting decision information from the network node to the mobile station, whether a selection of the selected one of the two or more transmission modes is accepted or rejected, and providing the decision information via a user interface to a user of said mobile station. This provides the advantage to provide the user of the mobile station with information, whether the selection by the user has been accepted or rejected by the radio communication network.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a radio communication system, which contains a base station, a mobile station and a database according to embodiments of the invention.

Figure 2 shows schematically a flow diagram of a method in accordance to the embodiments of the invention.

Figure 3 shows schematically two further flow diagrams of further methods in accordance to further embodiments of the invention.

Figure 4 shows schematically a block diagram of a mobile station according to the embodiments of the invention.

Figure 5 shows schematically a block diagram of a network node according to the embodiments of the invention.

Figure 6 shows schematically a block diagram of a database according to the embodiments of the invention.

Figure 7 shows schematically a block diagram of a subscriber identity module according to a further preferred embodiment of the invention.

## DESCRIPTION OF THE EMBODIMENTS

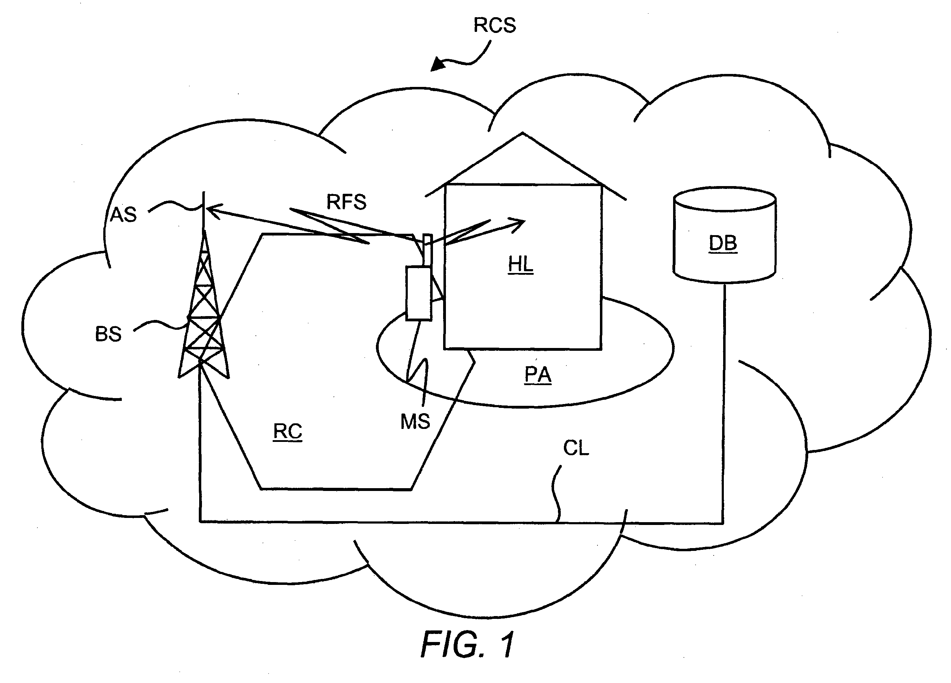

Figure 1 shows schematically a radio communication system RCS, which contains exemplarily a base station BS, a mobile station MS and a database DB. Further base stations, further mobile stations and other network nodes of the radio communication system RCS are not shown for simplification. The radio communication system RCS may be for example a WLAN (WLAN = wireless local area network) such as defined by IEEE 802.11 standards, a WiMAX network (WiMAX = Worldwide Interoperability for Microwave Access) such as one of the IEEE 802.16 family of wireless-networks standards ratified by the WiMAX Forum or an LTE access network (LTE = Long Term Evolution) such as defined by 3GPP (3GPP = Third Generation Partnership Project).

The term "base station" may be considered synonymous to and/or referred to as a base transceiver station, access point base station, access point, macrocell, microcell, femtocell, picocell etc. and may describe equipment that provides wireless connectivity via one or more radio links to one or more mobile stations.

The base station BS may be for example an LTE Node B, a so-called femtocell, an IEEE 802.11 access point, or a WiMAX base station.

The term "mobile station" may be considered synonymous to, and may hereafter be occasionally referred to, as a mobile unit, mobile user, access terminal, user equipment, subscriber, user, remote station etc.

The base station BS contains an antenna system AS or is connected per remote to the antenna system AS.

The mobile station MS may be for example a cellular telephone, an LTE smart phone, a portable computer such as a notebook with a WLAN and/or an LTE interface card, a USB data stick with a WLAN and/or an LTE interface, a pocket computer, a hand-held computer, a personal digital assistant, or an integrated circuit, which can be implemented in any portable device or vehicle such as a car.

The database DB may be part of the radio communication system RCS as shown in Figure 1 or may be part of an external network, which is connected to the radio communication system RCS (not shown in Figure 1 for simplification).

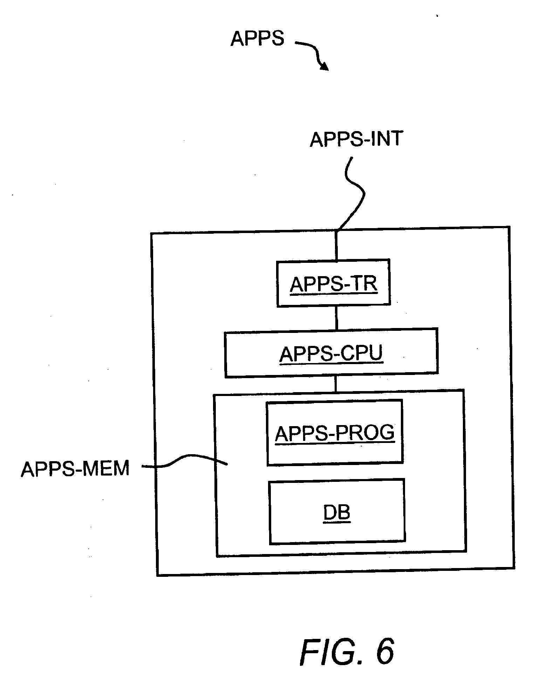

The database DB may be part of an application server (see Figure 6) or may be part a so-called network cloud, that contains a group of network servers and that provides one or several application services.

The database DB stores individually for each subscriber or collectively for a group of subscribers or all subscribers predefined areas for reduced electromagnetic radiation for example according to following table 1:

| Central geographical coordinates | Distance value in meters | Type of pre-defined area | Sensitive area | Predefined area related to | | |
|---|---|---|---|---|---|---|
| | | | | specific subscriber | group of subscribers | all subscribers |
| 52° 28,024' N, 13° 12',145 E | 100 | hospital | Y | | | X |
| 52° 34,274' N, 13° 25',726 E | 40 | kindergarten | N | | Group A | |
| 52° 39,581' N, 13° 10',472 E | 50 | Fuel station | Y | | | X |
| 52° 47,472' N, 13° 12',145 E | 25 | home | N | Subscriber B | | |
| 52° 29,200' N, 13° 05',125 E | 30 | home | N | Subscriber C | | |
| 52° 14,753' N, 13° 36',500 E | 1500 | airport | Y | | | X |

Table 1 for predefined areas of reduced electromagnetic radiation A coverage area of a predefined area given in the above table may be defined for example as a circular area around the central geographical coordinates by a distance value in meters from a location of the central geographical coordinates.

The predefined area for the kindergarten at the central geographical coordinates 52° 34,274' N, 13° 25',726 E may be only applied to subscribers, who belong to the group A.

The predefined area for the home at the central geographical coordinates 52° 47,472' N, 13° 12',145 E may be only applied for the subscriber B. The predefined area for the fuel station at the central geographical coordinates 52° 39,581' N, 13° 10',472 E may be applied to all subscribers of the radio communication system RCS and may be also applied to subscribers from other operators for example in a foreign country, who visits the radio communication system RCS.

Exemplarily a predefined area PA at around a location of a hospital HL is shown in Figure 1.

The predefined areas may be label as sensitive or non-sensitive areas for electromagnetic radiation. Such a labelling may be provided subscribers, by an operator of the radio communication system RCS or by government supervision.

The antenna system AS provides wireless coverage for a radio cell RC.

The term "radio cell" may be considered synonymous to, and may hereafter be occasionally referred to, as a cell, sector, or radio sector.

The mobile station MS is located within the radio cell RC.

The base station BS is connected to the database DB for example by a fixed connection line CL, which may be based on a so-called S1 interface such as applied in 3GPP LTE.

The mobile station MS is located in or near an area SA, which is known to be sensitive for electromagnetic radiation. The area SA may be for example a hospital, a kindergarten, a fuel station or an airplane.

The mobile station MS is configured with two or more transmission modes for transmitting radio frequency signals RFS from the mobile station MS for example according to following table 2:

| Number of transmission mode | Name of transmission mode | Set of predefined transmission parameters |
|---|---|---|
| 1 | Eco mode A | Maximum transmission power level A, fractional path loss compensation factor A |
| 2 | Eco mode B | Maximum transmission power level A, fractional path loss compensation factor B |
| 3 | High performance mode | Maximum transmission power level B, fractional path loss compensation factor C |

(continued)

| Number of transmission mode | Name of transmission mode | Set of predefined transmission parameters |
|---|---|---|
| 4 | Standard mode | Maximum transmission power level C, fractional path loss compensation factor D |

Table 2 for various transmission modes used by the mobile station MS The table 2 contains exemplarily a first eco mode A and a second eco mode B. The first eco mode A allows the mobile station MS to transmit the radio frequency signals RFS with a higher transmission power than a predefined maximum transmission power level A, if it for example doubtful, that the transmitted radio frequency signals RFS will be received by a receiver. The second eco mode B is restricted to the predefined maximum transmission power level A, even if a connection loss may happen. Alternatively, only a single eco mode such as the second eco mode B may be applied according to the invention.

In the eco modes A and B, the maximum transmission power level A may be set for example to 75 % of an absolute maximum transmission power level, that the mobile station BS is able to apply for transmitting radio frequency signals RFS. In an alternative, the maximum transmission power level A may be set for example to a value that is 10 % below a transmission power level that is requested by the base station BS. Thereby, the electromagnetic radiation from the mobile station MS and an impact on electronic devices, humans or animals near the mobile station MS is reduced.

In the high performance mode, the maximum transmission power level B may be set for example to a value that is 10 % above the maximum transmission power level that is requested by the base station BS. Thereby, a probability for an error-free uplink transmission is increased.

In the standard mode or normal mode, the mobile station MS may transmit the radio frequency signals RFS with a transmission power level as requested by the base station BS.

Table 2 further contains a fractional path loss compensation factor $\alpha_c$, which is well-known for example from the LTE standard 3GPP TS 36.213 V10.2.0, section 5.1.1 (see following equation (2)), which is 1 for full path loss compensation and below 1 for fractional compensation.

The mobile station MS may be further configured with a pre-selection of transmission modes to locations of the mobile station for example according to following table 3:

Table 3 for pre-selection of transmission modes regarding locations of the mobile station MS

| Central geographical coordinates | Distance value in meters | Type of pre-defined area | Pre-selected transmission mode |
|---|---|---|---|
| 52° 28,024' N, 13° 12',145 E | 100 | hospital | Eco mode A |
| 52° 34,274' N, 13° 25',726 E | 40 | kindergarten | Standard mode |
| 52° 39,581'N, 13° 10',472 E | 50 | Fuel station | Eco mode B |
| 52° 47,472' N, 13° 12',145 E | 25 | home | High performance mode |
| 52° 14,753' N, 13° 36',500 E | 1500 | airport | Eco mode A |

The mobile station MS may obtain a current location of the mobile station MS with help of positioning information, which may be provided for example by a GPS receiver of the mobile station MS. If the mobile station MS is located within a radius of the distance value of the table 3 around the central geographical coordinates provided by the table 3, the mobile station MS may apply a corresponding transmission mode as preselected by the table 3.

Due to the close location to the area SA, the mobile station MS based on location information may automatically select from a group of two or more transmission modes of a radio access technology such as UMTS (UMTS = Universal Mobile Telecommunication Systems), LTE, IEEE 802.11n or WiMAX for a transmission of radio frequency signals RFS a transmission mode, which reduces an impact of the radio frequency signals RFS on the area SA. In an alternative, the user of the mobile station MS, who is aware of the area SA, may select the transmission mode with reduced impact on the area SA for example via a graphical user interface of the mobile station MS. After this selection, the mobile station MS transmits the radio frequency signals RFS by applying the selected transmission mode.

In a preferred embodiment, the base station BS may accept or reject the transmission mode selected at the mobile station MS for example based on information provided by the database DB (see also table 1 above).

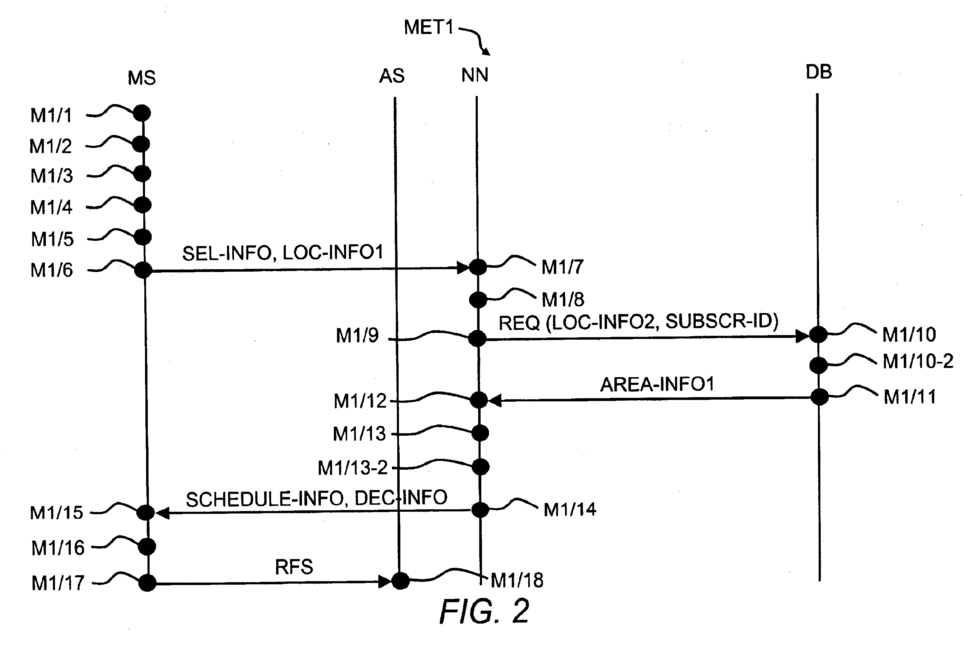

The invention is described in more detail with respect to Figure 2 and corresponding description.

Referring to Figure 2 a flow diagram of a method MET1 in accordance to several embodiments of the invention is shown. The number of the steps for performing the method MET1 is not critical, and as can be understood by those skilled in the art, that the number of the steps and the sequence of the steps may vary without departing from the scope of the present invention as defined in the appended claims, e.g. some of the steps may be performed simultaneously (e.g. steps M1/2 and M1/3), some of the steps may be alternative steps (e.g. steps M1/2 and M1/3 or step M1/4) or some of the steps may be ignored (e.g. steps M1/2, M1/3, M1/4, M1/9 to M1/12, M1/13, M1/14 to M1/16 and/or M2/1 to M2/4).

The method MET1 may be executed by the mobile station MS, by the antenna system AS, by a network node NN, and by the database DB. For a person skilled in the art it is clear, that the method MET1 may be extended with respect to further mobile stations, further network nodes, and further databases.

The network node NN may be for example may be preferably the base station BS, an access point of a WLAN, or a network controller such as an RNC used in UMTS. Alternatively, the network node NN may be an MME such as used in LTE or generally a network node for handling user profiles. The method MET1 may start with a step M1/1, in which the user of the mobile station MS may switch on the mobile station MS. Alternatively, the method MET1 may start at steps M1 /2, M1 /3 or M1 /4 periodically within a predefined time or by an initiation of the user of the mobile station MS for example via the graphical user interface of the mobile station MS.

In the further optional step M1/2, the mobile station MS verifies a charging condition of a battery or an accumulator of the mobile station MS, which supplies the mobile station MS with electrical energy. The verification may be executed for example in a following way: The mobile station MS measures in a first step a charging condition and provides a result of the measurement as a percentage value in comparison to a full charge. In a second step, the mobile station MS compares the percentage value with a predefined threshold value in percent. If the percentage value is below the predefined threshold value in percent, a charging condition bit will be set for example for the eco mode and the normal mode (see Table 2) but not for the high performance mode.

In the next optional step M1/3, the mobile station MS verifies a current location of the mobile station MS with a location map, which contains one or more pre-selections of the two or more transmission modes for a predefined area (see table 3). The verification may be executed for example in a following way: The mobile station MS measures in a first step the current location of the mobile station for example by processing signals, that are received from satellites at a GPS receiver of the mobile station MS. In a next step a result of the measurement may be provided as geographical coordinates. In a further step, the mobile station MS determines a distance based on a location of the geographical coordinates to central geographical coordinates provided by table 3. If the distance fits is equal to or below one of the distance values provided by table 3, the mobile stations may set a location condition bit for a corresponding transmission mode.

In the further optional step M1/4, the mobile station MS may present the user of the mobile station MS via the graphical user interface for example a so-called user dialogue box. The graphical user interface may be for example a touchscreen or a display with a cursor. The graphical user interface may indicate for example three buttons for the transmission modes "Eco", "High Performance" or "Standard". In such a case, the step M1/4 may executed every time, the mobile station MS is switched on.

In an alternative, the user of the mobile station MS may access a so-called configuration checkbox via the graphical user interface. The configuration checkbox may be for example part of a configuration menu for the mobile station MS, which contains common settings such as choice of radio communication network, vibration on/off, WiFi (WiFi = Wireless Fidelity) on/off, Bluetooth on/off, sound on/off, display background etc. The user of the mobile station MS may provide a pre-selection for a specific transmission mode for example by setting a mark in a corresponding box. In a next step M1/5, the user of the mobile station MS or the mobile station MS itself selects a transmission mode for the radio access technology, that will be used for transmission of the radio frequency signals RFS from the mobile station MS.

The selection of the transmission mode may be done permanently as long as the mobile station MS is switched off or is set into a so-called flight mode, in which a transmitter for the radio access technology does not transmit the radio frequency signals RFS.

In an alternative, the selection of the transmission mode may be done for a predefined time such as minutes or hours and the selection may be repeated, if the predefined time has elapsed.

In a further alternative, a duration of the selection of the transmission mode may depend on a change of the charging condition of the battery of the accumulator and/or may depend on a change of the current location of the mobile station MS.

If the mobile station MS itself selects the transmission mode, the selection may be based on the step M1/2 and/or the step M1 /3. Preferably, a transmission mode for which the location condition bit is set may have a higher priority than a transmission mode for which the charging condition bit is set. In an alternative, the mobile station MS selects the transmission mode based on the pre-selection by the user of the mobile station, which has been performed in the step M1/4 or in a previous execution of the method MET1.

If the user of the mobile station MS selects the transmission mode, the user for example may press with his or her finger a corresponding button on the touchscreen or may click with the cursor the corresponding button.

The method MET1 may be proceeded with a step M1/17. Preferably, the method MET1 continues with a step M1/6.

In the next step M1/6, the mobile station MS transmits selection information SEL-INFO to the network node NN, which receives the selection information on a further step M1/7. The selection information SEL-INFO may contain an identifier of a transmission mode, which has been selected by the step M1/5. Optionally, the mobile station MS may further transmit first location information LOC-INFO1 to the network node NN. The first location information LOC-INFO1 may contain for the example the geographical coordinates, which have been determined in the step M1/3.

In a further optional step M1/8, the network node NN may determine a current location of the mobile station MS within the radio cell RC for example based on the geographical coordinates as received in the step M1/7. Alternatively, the network node NN may determine the current location of the mobile station MS for example by triangulation for uplink radio frequency signals, which are received from the mobile station MS at two or more antenna systems of the radio communication system RCS. In an alternative, the current location of the mobile station MS may be determined based on a reported so-called pre-coding vector and/or based on a transit time of the uplink radio frequency signals from the mobile station MS to an antenna system of the radio communication system RCS. Such positioning methods are known for a skilled person and are therefore not described in more detail.

If the mobile station MS is determined to be located at an edge of the radio cell RC, a cell edge bit may be set by the network node NN. If the mobile station MS is determined to be located in a centre of the radio cell RC, a cell centre bit may be set by the network node NN.

A next step after the step M1 /8 may be step M1 /13. Alternatively, the method MET1 may be continued with step M1 /9.

During the step M1 /9, the network node NN transmits a request REQ to the database DB, which is received by the database DB in a further step M1/10. The request REQ requests information of one or more pre-selections within a predefined distance from the current location of the mobile station MS. Therefore, the request REQ may contain the geographical coordinates of the current location of the mobile station MS and a distance value as second location information LOC-INFO2. Preferably, the request REQ may further contain an identifier SUBSCR-ID for the user or the subscriber of the mobile station MS.

In a further step M1/10-2, the database DB determines one or more pre-selections based on the received second location information LOC-INFO2. Preferably, the database DB selects all pre-selections of predefined areas, which are predefined for all users or all subscribers and which are within the predefined distance from the current location of the mobile station MS. If the database DB also receives the identifier SUBSCR-ID, the database DB may further determine one or more pre-selections, which are predefined for the respective user or subscriber and/or which are predefined for a subscriber group of which the respective subscriber is a member.

In a next step M1/11, the database DB transmits information AREA-INFO1 of the determined one or more pre-selections of the one or more predefined areas to the network node NN, which receives the information AREA-INFO in a further step M1/12. The information AREA-INFO contains for example data from all columns of the respective predefined area as listed in table 1. Alternatively, the information AREA-INFO may contain for example the data of columns 1 to 4 of the respective predefined area.

The steps M1/9 to M1/12 are only node internal steps, if the network node NN contains the database DB.

In a next step M1/13, the network node NN accepts or rejects the transmission mode as selected by the mobile station MS or by the user of the mobile station MS.

The acception or the rejection may be based on a verification of one or more of the following conditions:

The predefined area in which the mobile station MS is currently located may be labelled as a sensitive area for electromagnetic radiation (see table 1 column 4). Such a labelling may be more important, than a target of the operator of the radio communication system RCS to optimize a data throughput in the radio communication system RCS.

The network node NN may verify, whether a cell edge bit or a cell centre bit is set for the mobile station MS. If for example the cell edge bit is set for the mobile station MS, the network node NN may reject the eco mode, because otherwise the radio frequency signals RFS are not received with sufficient power at one or several antenna systems of the radio communication system RCS.

The network node NN may further verify, whether the uplink radio frequency signals RFS of the mobile station MS shall be received and processed by the radio communication system RCS by applying a so-called CoMP mode (CoMP = Cooperative Multipoint) or the uplink radio frequency signals RFS of the mobile station MS shall be received by a single antenna system of the radio communication system RCS. The radio communication system RCS may schedule mobile stations, which are located at a cell edge, by the CoMP mode and may schedule further mobile stations, which are located at a centre of a radio cell by a non-CoMP mode, which is a single-point to single-point transmission from a mobile station to a single antenna system of the radio communication system RCS. Radio resources such as PRBs (PRB = Physical Resource Block) as applied in 3GPP LTE for the radio cell RC may be split and predefined for the CoMP mode and the non-CoMP mode. Preferably, a first set of transmission parameters may be predefined for the CoMP mode and a second set of transmission parameters may be predefined for the non-CoMP mode.

As opposed to 3G radio communication systems such as UMTS in which the mobile station MS always use the entire transmission bandwidth, in LTE uplink resources can be assigned as a fraction of a total transmission bandwidth. The PRB as a smallest uplink resource has a bandwidth of 180 KHz. Therefore, in OFDM radio communication systems such as 3GPP LTE it is more appropriate to control a mobile station's PSD (PSD = power spectral density) rather than controlling an absolute power of the mobile station. A transmit PSD of a mobile station can be defined for example in case of 3GPP LTE as a transmit power per physical resource block.

A transmit power of the mobile station MS for an uplink transmission via an uplink channel such as PUSCH (PUSCH = physical uplink shared channel) as defined in 3GPP LTE or in 3GPP LTE Advanced varies as a function of physical resource blocks, which are simultaneously be assigned to the mobile station, as described by following equation:

$$P_{\text{PUSCH},c}(i) = N \cdot P_{\text{PUSCH},c,PRB}(i) \qquad (1)$$

where:

- $P_{\text{PUSCH},c}(i)$: transmit power of the mobile station in subframe i for serving cell c,
- $N$ : number of simultaneously assigned physical resource blocks,
- $P_{\text{PUSCH},c,PRB}(i)$: transmit power of the mobile station in the subframe i for the serving cell c per physical resource block.

The transmit power of the mobile station MS may be calculated for example by following equation, which is based on an equation given on page 9 of the standard document 3GPP TS 36.213 V10.2.0, section 5.1.1:

$$P_{\text{PUSCH},c}(i) = \min\begin{cases} P_{\text{CMAX},c}(i), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) \end{cases}$$
$$[\text{dBm}]$$
$$(2)$$

where:

- $P_{\text{CMAX},c}(i)$ : configured maximum transmit power of the mobile station in the subframe i for the serving cell c, for example, 23 dBm,
- $M_{\text{PUSCH},c}(i)$: bandwidth of a PUSCH resource assignment expressed in number of the physical resource blocks valid for the subframe i and the serving cell c,
- $P_{\text{O\_PUSCH},c}(j)$ is a parameter composed of the sum of a component $P_{\text{O\_NOMINAL–PUSCH},c}(j)$ provided from higher layers for $j$=0 and 1 and a component $P_{\text{O\_UE\_PUSCH},c}(j)$ provided by higher layers for $j$=0 and $I$ for the serving cell c (for more details see 3GPP TS 36.213 V10.2.0, section 5.1.1.1), parameter j allows for a differentiation between different types of uplink transmission: semi-persistent (e.g. for VoIP) and dynamically scheduled resources, and random access resources,

- The fractional path loss compensation factor $\alpha_c$ may be a 3-bit parameter provided by higher layers for the serving cell c,
- $PL_c$ is a downlink pathloss estimate calculated in the mobile station MS1 or MS2 for the serving cell c in dB (for more details see 3GPP TS 36.214 V10.1.0, section 5.1.1.1),

- $\Delta_{TF,c}(i) = 10\log_{10}\left(\left(2^{BPRE \cdot K_s} - 1\right) \cdot \beta_{offset}^{PUSCH}\right)$ for $K_s$ = 1.25 and 0 for $K_s$ = 0 *where* $K_s$ is given by a parameter *deltaMCS-Enabled* provided by higher layers for each serving cell c, $K_s$ =0 for transmission mode 2, (for more details regarding *BPRE* and $\beta_{offset}^{PUSCH}$ see 3GPP TS 36.213 V10.2.0, section 5.1.1.1),
- $f_c(i)$ : current PUSCH power control adjustment state for the serving cell c (for more details see 3GPP TS 36.213 V10.2.0, section 5.1.1.1).

In principle, the transmit power of the mobile station MS is adjusted by *PO_PUSCH,c(j)* and by the fractional path loss compensation factor $\alpha_c$. By using $\Delta_{TF,c}(i)$ it is possible to apply a correction per transport format.

A first IoT value such as for example 15 dB may be predefined for the uplink CoMP mode and a second IoT value such as for example 5 dB may be predefined for the one or several uplink single-point to single-point transmissions. The first IoT value and the second IoT value may be predefined by the network server NS. A fulfilment of the first predefined IoT value and the second predefined IoT value may be periodically checked by performing measurements at the base station BS as part of a cooperation area of antenna systems and by averaging the measurements over a predefined averaging time.

A first $P_{O\_PUSCH,c}(j)$ parameter may be predefined as a single first power control parameter for the uplink CoMP mode and may be iteratively adapted to keep the first predefined IoT value for the uplink CoMP mode over the predefined averaging time. Similarly, a second $P_{O\_PUSCH,c}(j)$ parameter may be predefined as a single second power control parameter for the one or several uplink single-point to single-point transmissions and may be iteratively adapted to keep the second predefined IoT value for the one or several uplink single-point to single-point transmissions over the predefined averaging time.

If for example the first predefined IoT value is exceeded for a predefined time (e.g. the predefined averaging time) in a neighbouring radio cell of the radio cell RC, an overload indicator may be transmitted from a further base station of the neighbouring radio cell to the base station BS. Receiving the overload indicator will trigger the base station BS to reduce iteratively the first predefined $P_{O\_PUSCH,c}(j)$ parameter until no further overload indicator is received from the further base station.

In further alternatives, a set of first power control parameters such as the $P_{O\_PUSCH,c}(j)$ parameter and/or the 3-bit parameter $\alpha_c$ and/or the parameter *deltaMCS*-Enabled and/or a parameter *pathlossReferenceLinking* for configuring the higher layer filtered RSRP and/or a parameter *Accumulation-enabled* for enabling accumulation such as defined in 3GPP TS 36.213 V10.2.0, section 5.1.1.1 may be predefined at the network node for the CoMP mode. Accordingly, similar parameters may be predefined at the network node NN for the non-CoMP mode.

For single-point to single-point transmissions from the mobile station MS to a single antenna system of the radio communication system RCS, an IoT operational point of the radio communication system RCS is much lower than an IoT operational point of a radio communication system RCS in a CoMP mode. This means, if the mobile station MS transmits for example in an uplink CoMP mode, the mobile station MS must be operated with different power control parameters than a case, that the mobile station MS transmits in the non-CoMP mode.

If for example the network node NN has decided to schedule the mobile station MS in the CoMP mode because the mobile station MS is located at the edge of the radio cell RC, the selection of the mobile station MS to transmit the radio frequency signals RFS in the Eco mode may be rejected. If the mobile station MS may be at a location or in a condition, that the network node NN has determined no big difference between operating the mobile station MS in the CoMP mode or in the non-CoMP, the network node NN may use the selection of the transmission at the mobile station MS as a trigger to schedule the mobile station MS in that mode, that is suitable to the transmission mode selected by the mobile station MS and the network node NN accepts the selection of the transmission mode.

In a further step M1/14, the network node NN transmits scheduling information SCHEDULE-INFO to the mobile station MS, which receives the scheduling information SCHEDULE-INFO in a next step M1/15. The scheduling information SCHEDULE-INFO may contain for example one or several so-called uplink grants with an indication of one or several PRBs to be used for a next transmission of the radio frequency signals RFS by the mobile station MS.

Preferably, the network node NN may further transmit decision information DEC-INFO to the mobile station MS. The decision information DEC-INFO contains an indication, whether the transmission mode as selected at the mobile station MS is accepted or rejected and may contain an indication for a transmission mode as required by the radio communication system RCS. In a further optional step M1/16, the mobile station MS may provide the received decision information DEC-INFO via the graphical user interface to the user of the mobile station MS for example a text indication "Selected transmission mode accepted" or a further text indication "Selected transmission mode rejected".

In a next step M1/17, the mobile station MS transmits the radio frequency signals RFS for a transmission of uplink user data, which are received at the antenna system AS in a further step M1/18. The radio frequency signals RFS are transmitted with a transmission mode (e.g. the Eco mode) as selected by the mobile station MS or with a further transmission mode (e.g. the Standard mode) as required by the network node NN.

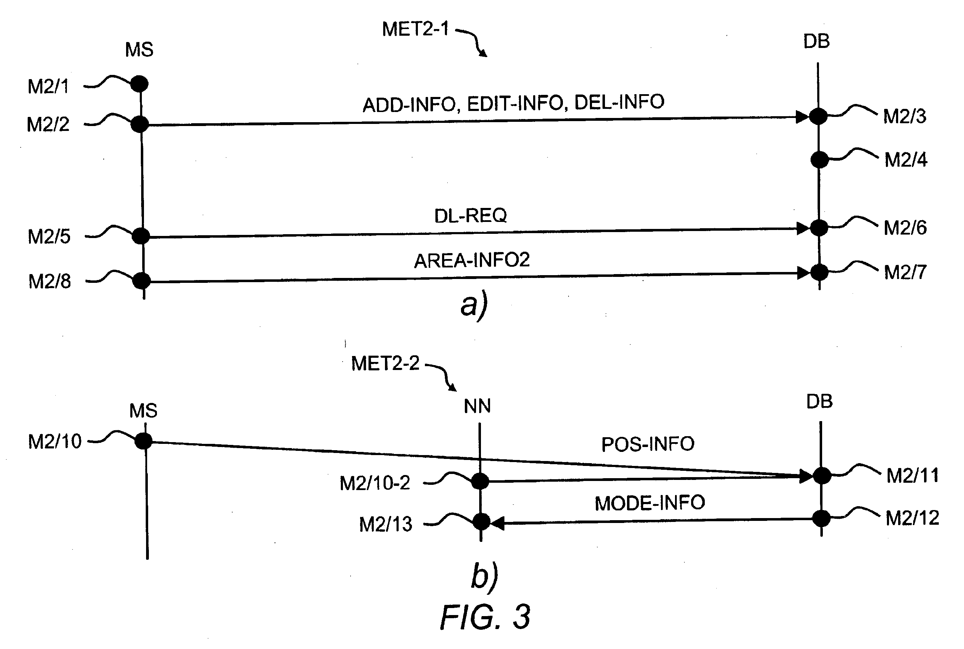

Referring to Figure 3 a) a flow diagram of a further method MET2-1 in accordance to a preferred embodiment of the invention is shown. The number of the steps for performing the further method MET2-1 is not critical, and as can be understood by those skilled in the art, that the number of the steps and the sequence of the steps may vary without departing from the scope of the present invention as defined in the appended claims.

The further method MET2-1 may be executed after the method MET1 or may be executed in parallel to the method MET1.

In a first step M2/1, the user or subscriber of the mobile station MS may start a computer program or a so-called mobile app at the mobile station MS to be able to add or delete via the graphical user interface one or several pre-selections of transmission modes for one or several predefined areas of the radio communication system RCS.

In a further step M2/2, the mobile station MS transmits information ADD-INFO of the added one or several pre-selections and/or further information DEL-INFO of the deleted one or several further pre-selections to the database DB, which receives the information ADD-INFO and/or the further information DEL-INFO in a next step M2/3.

In a further alternative, the mobile station MS transmits update information EDIT-INFO for an existing pre-selection, if the user for example wants to change the distance value parameter.

The information ADD-INFO according to a new pre-selection and a new predefined area contains for example all columns of a row as shown in table 3.

The further information DEL-INFO contains for example one or several identifications for the pre-selections that should be deleted at the database DB. Such identifications may be part of the table 1 and the table 3 but not shown for simplification.

In a further step M2/4, the database DB is updated according to the received information.

The steps M2/1 to M2/4 may be done, if for example the user of the mobile station MS relocates from city A to city B to update the predefined "home" area (see table 1).

At a later point of time independently from the steps M2/1 to M2/4, in a further step M2/5, the mobile station MS transmits a download request DL-REQ to the database DB, which receives the download request DL-REQ in a next step M2/6. The download request DL-REQ may requests all pre-selections of the user of the mobile station MS or pre-selections of a predefined region such as a respective town or city, which are stored at the database DB.

In a next step M2/7, the database DB transmits the requested information AREA-INFO2 to the mobile station MS, which receives the information AREA-INFO2 in a further step M2/8. The information AREA-INFO2 contains the pre-selections of transmission modes for the mobile station MS within the predefined region.

The steps M2/5 to M2/8 may be done, if for example the user wants to download the pre-selections and predefined areas on a new subscriber identity module or on a new mobile station or if the pre-selections have been deleted by a mistake on the mobile station MS.

Referring to Figure 3 b) a flow diagram of an even further method MET2-2 in accordance to a further preferred embodiment of the invention is shown. The number of the steps for performing the further method MET2-2 is not critical, and as can be understood by those skilled in the art, that the number of the steps and the sequence of the steps may vary without departing from the scope of the present invention as defined in the appended claims.

The further method MET2-2 may be executed after the method MET1 or may be executed in parallel to the method MET1.

In a first step M2/10 the mobile station MS or in a first step M2/10-2 the network node NN transmits positioning information POS-INFO to the database DB, which receives the positioning information POS-INFO in a further step M2/11. The positioning information POS-INFO contains information of a current location of the mobile station MS within a coverage area of the radio communication system RCS.

In a next step M2/12, the database DB transmits transmission mode information MODE-INFO for the current location of the mobile station MS to the network node NN, which receives the transmission mode information MODE-INFO in a further step M2/13. The transmission mode information MODE-INFO may contain one or several transmission mode restrictions in the case the mobile station is in a sensitive area, where a usage of a pre-defined of transmission mode is desirable or required. The transmission mode restrictions may be mandatory or optional for the network node NN. The steps M2/10 to M2/13 may be done, if for example the mobile station MS moves during a handover from a first base station to a second base station, which is the network node NN.

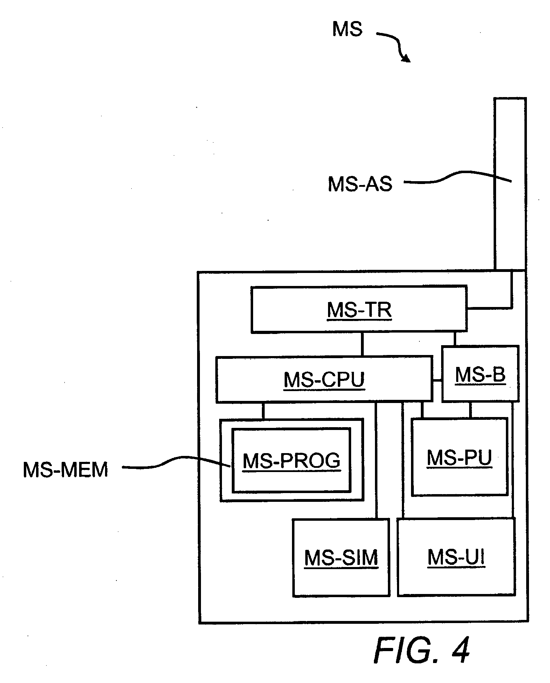

Referring to Figure 4 a block diagram of the mobile station MS is shown. The mobile station MS may contain an antenna system MS-AS, a transceiver MS-TR connected to the antenna system MS-AS, a CPU (CPU = central processing unit) MS-CPU connected to the transceiver MS-TR or as part of the transceiver MS-TR, a computer readable medium MM-MEM connected to the CPU MS-CPU, a positioning unit MS-PU connected to the CPU MS-CPU, a subscriber identity module MS-SIM connected to the CPU MS-CPU, the graphical user interface MS-UI connected to the CPU MS-CPU, and a power supply unit MS-B, which may be connected to the transceiver MS-TR, to the CPU MS-CPU, to the positioning unit MS-PU, and the graphical user interface MS-UI.

The transceiver MS-TR may be dedicated for a specific radio access technology or may be reconfigurable between a first radio access technology such as GSM/GPRS and one or several further radio access technologies such as UMTS, LTE, WiMAX. If the mobile station MS is reconfigurable between different radio access technologies, the table Table 1, Table 2 and Table 3 may contain a further column to identify a respective radio access technology.

A computer readable program MS-PROG may be stored at the computer readable medium MS-MEM. The CPU MS-CPU is foreseen for executing the computer readable program MS-PROG. The computer readable program MS-PROG is foreseen for executing and controlling steps of the method MET1 and the method MET2, which are related to the mobile station MS.

The computer readable medium MS-MEM may contain information of the table 3 in a respective data array. In an alternative, the subscriber identity module MS-SIM may contain information of the table 3 in a respective dat array.

The positioning module MS-PU may be for example a GPS receiver, which determines the current location of the mobile station MS according to the step M1/3.

The antenna system MS-AS and the transceiver MS-TR are used to transmit the radio frequency signals RFS, the selection information SEL-INFO and the first location information LOC-INFO1. The antenna system MS-AS and the transceiver MS-TR are further used to receive the scheduling information SCHEDULE-INFO and the decision information DEC-INFO.

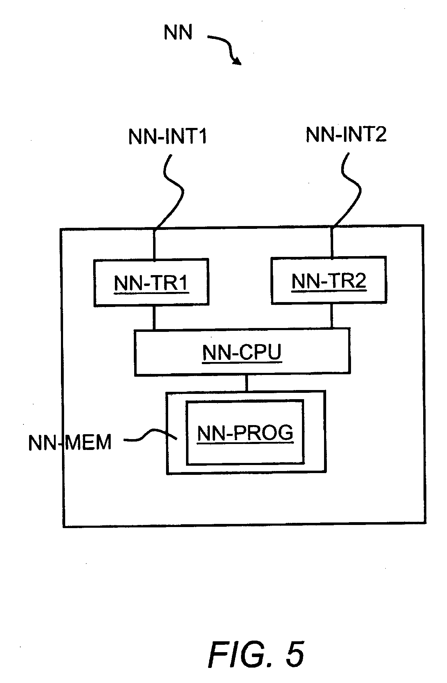

Referring to Figure 5 a block diagram of the network node NN is shown. The network node NN may contain a first interface NN-INT1, a first transceiver NN-TR1 connected to the first interface NN-INT1, a CPU NN-CPU connected to the first interface NN-INT1, and a computer readable medium NN-MEM. A computer readable program NN-PROG may be stored at the computer readable medium NN-MEM. The CPU NN-CPU is foreseen for executing the computer readable program NN-PROG. The computer readable program NN-PROG is foreseen for executing and controlling steps of the method MET1, which are related to the network node NN.

The computer readable medium NN-MEM may contain information of the table 1 in a respective data array, which have been received from the database DB.

If the network node NN is the base station BS, the network node NN further contains a second interface NN-INT2 and a second transceiver NN-TR2 connected to the second interface NN-INT2 and the CPU NN-CPU. The antenna system AS may be connected to the second interface NN-INT2. The first interface NN-INT1 and the first transceiver NN-TR1 are used to transmit the request REQ. The first interface NN-INT1 and the first transceiver NN-TR1 are further used to receive the information AREA-INFO. The second interface NN-INT2 and the second transceiver NN-TR2 are used to transmit the scheduling information SCHEDULE-INFO and the decision information DEC-INFO. The second interface NN-INT2 and the second transceiver NN-TR2 are further used to receive the selection information SEL-INFO, the first location information LOC-INFO1 and the radio frequency signals RFS of the uplink user data.

Referring to Figure 6 a block diagram of the application server APPS is shown. The application server APPS may be a single server providing the full information of pre-selections and related predefined areas or the application server APPS may be part of a cloud computing architecture and provides only a part of the information of pre-selections and related predefined areas.

The application server APPS may contain an interface APPS-INT, a transceiver APPS-TR connected to the interface APPS-INT, a CPU APPS-CPU connected to the transceiver APPS-TR, and a computer readable medium APPS-MEM. A computer readable program APPS-PROG and the database DB may be stored at the computer readable medium APPS-MEM.

In case of the cloud computing architecture, the computer readable medium APPS-MEM may only store in a respective data array a part of the database DB such as information of specific rows of the table 1 or information of specific columns of the table 1.

The CPU APPS-CPU is foreseen for executing the computer readable program APPS-PROG. The computer readable program APPS-PROG is foreseen for executing and controlling steps of the method MET1 and the method MET1, which are related to the database DB.

The interface APPS-INT and the transceiver APPS-TR are used to transmit the information AREA-INFO. The interface APPS-INT and the transceiver APPS-TR are further used to receive the request REQ, the information ADD-INFO, the further information DEL-INFO or the even further information EDIT-INFO.

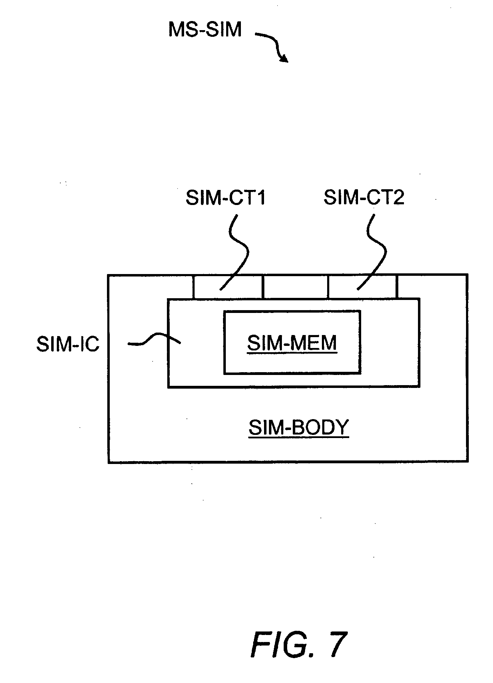

Referring to Figure 7 a block diagram of the subscriber identity module MS-SIM is shown. The subscriber identity module MS-SIM may be based on a conventional subscriber identity module and may contain exemplarily a first contact area SIM-CT1, a second contact area SIM-CT2, an integrated circuit SIM-IC connected to the first contact area SIM-CT1 and the second contact area SIM-CT2, and a plastic body SIM-BODY.

The first contact area SIM-CT1 and the second contact area SIM-CT2 are used to connect the subscriber identity module MS-SIM to the CPU MS-CPU as shown in Figure 4.

The integrated circuit SIM-IC contains a permanent memory SIM-MEM, which stores for example well-known parameters such as a unique serial number (ICCID = Integrated Circuit Card Identifier), an internationally unique number of the subscriber (IMSI = International Mobile Subscriber Identity), a first password (PIN = Personal Identification Number) and a second password (PUK = PIN Unlock Code). The permanent memory SIM-MEM may further store information of the table 1 in a respective data array. Alternatively, the permanent memory SIM-MEM may only store a single pre-selected transmission mode such as the Eco mode B regardless of a predefined area.

A person of skill in the art would readily recognize that steps of the method MET1 and the further method MET2 of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (MET1) for selecting a transmission power mode at a mobile station (MS) for a transmission of radio frequency signals (RFS) from said mobile station (MS) using a radio access technology, said method (MET1) comprising the steps of:

   - selecting (M1/5) at said mobile station (MS) one of at least two transmission power modes of said radio access technology for said transmission, - transmitting (M1/6) selection information (SEL-INFO) of said selected one of said at least two transmission power modes from said mobile station (MS) to a network node (NN, BS) of a radio communication network (RCS),
   - accepting or rejecting (M1/13) at said network node (NN, BS) said selected one of said at least two transmission power modes,
   - transmitting (M1/14) decision information (DEC-INFO) from said network node (NN, BS) to said mobile station (MS), whether a selection of said selected one of said at least two transmission power modes is accepted or rejected, and
   - transmitting (M1/17) from said mobile station (MS) said radio frequency signals (RFS) using said selected one of said at least two transmission power modes or using a further transmission power mode as required by said network node (NN, BS).

2. Method (MET1) according to claim 1, wherein said one of said at least two transmission power modes is selected by said mobile station (MS) via a user pre-selection of said one of said at least two transmission power modes that is stored at said mobile station (MS) or wherein said one of said at least two transmission power modes is selected by a user of said mobile station (MS) via a user interface (MS-UI) of said mobile station (MS).

3. Method (MET1) according to claim 2, wherein said mobile station (MS) comprises a subscriber identity module (MS-SIM) and wherein said user pre-selection is stored at said subscriber identity module (MS-SIM).

4. Method (MET1) according to claim 2, wherein said mobile station (MS) selects said one of said at least two transmission power modes based on a charging condition of a power supply unit (MS-B) of said mobile station (MS) or based on a comparison of a current location of said mobile station (MS) with a location map, that comprises at least one pre-selection of said at least two transmission power modes for a pre-defined area (HL).

5. Method (MET2-1, MET2-2) according to claim 4, wherein said method (MET2-1, MET2-2) either comprises the steps of:

- adding (M2/1) via said user interface (MS-UI) a further pre-selection of said at least two transmission power modes for a further pre-defined area or deleting (M2/1) via said user interface (MS-UI) one of said pre-selections, and
- providing (M2/2, M2/3) information of said added further pre-selection or of said deleted one of said pre-selections to a database (DB), and
- updating (M2/4) said database (DB) with said information,

or comprises the steps of:

- providing (M2/10, M2/10-2, M2/11) information of a current position (POS-INFO) of said mobile station (MS) to said database (DB), and
- providing (M2/12, M2/13) information of at least one transmission power mode restriction (MODE-INFO) from said database (DB) to a network node (NN, BS) of a radio communication system (RCS).

6. Method (MET1) according to claim 1, wherein said network node (NN, BS) accepts or rejects said selected one of said at least two transmission power modes based on a location of said mobile station (MS) within a radio cell (RC) of said radio communication network (RCS) or based on a location of said mobile station (MS) within an area (HL) labeled or not labeled as a sensitive area for electromagnetic radiation.

7. Method (MET1) according to claim 6, wherein said method (MET1) further comprises the steps of:

- transmitting (M1/9) a request (REQ) from said network node (NN, BS) to said database (DB) for transmitting information of at least one pre-selection within a predefined distance to said current location of said mobile station (MS), and
- transmitting (M1/11) from said database (DB) to said network node (NN, BS) said information (AREA-INFO1),

and wherein said area (HL) labeled or not labeled as a sensitive area for electromagnetic radiation is one of said pre-selections stored at said database (DB).

8. Method (MET1) according to any of the preceding claims1, 6 or 7, wherein said method further comprises the step of providing (M1/16) said decision information (DEC-INFO) via a user interface (MS-UI) to a user of said mobile station (MS).

9. Method (MET1) according to claim 1, wherein a first transmission power mode of said at least two transmission power modes comprises a first set of power control parameters with a first maximum transmission power and wherein a second transmission power mode of said at least two transmission power modes comprises a second set of power control parameters with a second maximum transmission power larger than said first maximum transmission power and wherein said first transmission power mode is an eco mode for reduced electromagnetic radiation and wherein said second transmission power mode is a high performance mode for maximizing a data throughput.

10. Method (MET1) according to claim 9, wherein said second maximum transmission power of said high performance mode is set to a value that is 10 percent above a maximum transmission power level that is requested by a base station (BS).

11. A mobile station (MS) comprising:

- means (MS-CPU, MS-PROG, MS-UI, MS-SIM) for selecting one of at least two transmission power modes of a radio access technology for a transmission of radio frequency signals (RS) from said mobile station (MS),
- means (MS-AS, MS-TR) for transmitting selection information (SEL-INFO) of said selected one of said at least two transmission power modes from said mobile station (MS) to a network node (NN, BS) of a radio communication network (RCS),
- means (MS-TR, MS-AS) for receiving decision information (DEC-INFO) from said network node (NN, BS), whether a selection of said selected one of said at least two transmission power modes is accepted or rejected, and

- means (MS-TR, MS-AS) for transmitting said radio frequency signals (RFS) using said selected one of said at least two transmission power modes or using a further transmission power mode as required by said network node (NN, BS).

12. Mobile station (MS) according to claim 11, wherein said mobile station (MS) further comprises a subscriber identity module (MS-SIM) and wherein said subscriber identity module (MS-SIM) comprises means (SIM-MEM) for storing a user pre-selection for one of said at least two transmission power modes.

13. A network node (NN, BS) for use in a radio communication network (RCS), **characterized in that** said network node (NN, BS) comprises:

- means (NN-INT1, NN-TR1, NN-INT2, NN-TR2) for receiving selection information (SEL-INFO) of a selected one of at least two transmission power modes of a radio access technology for a transmission of radio frequency signals (RFS) from a mobile station (MS) applying the radio access technology, - means (NN-CPU, NN-PROG) for accepting or rejecting said selected once of said at least two transmission power modes, and

- means (NN-INT2, NN-TR2) for transmitting decision information (DEC-INFO) to said mobile station (MS), whether a selection of said selected one of said at least two transmission power modes is accepted or rejected.

14. Network node (NN, BS) according to claim 13, wherein said network node (NN, BS) is a base station for a cellular radio access network node, an access point for a wireless local area network, a network controller, a mobility management entity or a network node for handling user profiles.

15. A communication network (RCS) comprising a network node (NN, BS) according to claim 13 and an application server (APPS), wherein said application server (APPS) comprises means (APPS-MEM) for storing a user pre-selection for one of at least two transmission power modes of a radio access technology for a transmission of radio frequency signals (RFS) from a mobile station (MS).

**Patentansprüche**

1. Verfahren (MET1) zur Auswahl eines Sendeleistungsmodus an einer Mobilstation (MS) für die Übertragung von Funkfrequenzsignalen (RFS) von der besagten Mobilstation (MS) unter Verwendung einer Funkzugangstechnologie, wobei das besagte Verfahren (MET1) die folgenden Schritte umfasst:

- Auswählen (M1/5), an der besagten Mobilstation (MS), eines von mindestens zwei Sendeleistungsmodi der besagten Funkzugangstechnologie für die besagte Übertragung,
- Übertragen (M1/6) von Auswahlinformationen (SEL-INFO) des besagten ausgewählten der besagten mindestens zwei Sendeleistungsmodi von der besagten Mobilstation (MS) an einen Netzwerkknoten (NN, BS) eines Funkkommunikationsnetzwerks (RCS),
- Annehmen oder Ablehnen (M1/13), an dem besagten Netzwerkknoten (NN, BS) des besagten ausgewählten der besagten mindestens zwei Sendeleistungsmodi,
- Übertragen (M1/14) von Entscheidungsinformationen (DEC-INFO) darüber, ob eine Auswahl des besagten ausgewählten der besagten mindestens zwei Sendeleistungsmodi angenommen oder abgelehnt wird, von dem besagten Netzwerkknoten (NN, BS) an die besagte Mobilstation (MS), und
- Übertragen (M1/17), von der besagten Mobilstation (MS), der besagten Funkfrequenzsignale (RFS) unter Verwendung des besagten ausgewählten der besagten mindestens zwei Sendeleistungsmodi oder unter Verwendung eines weiteren Sendeleistungsmodus wie von der besagten Netzwerkknoten (NN, BS) gefordert.

2. Verfahren (MET1) nach Anspruch 1, wobei der besagte eine der besagten mindestens zwei Sendeleistungsmodi von der besagten Mobilstation (MS) über eine Benutzer-Vorauswahl des besagten einen der besagten mindestens zwei Sendeleistungsmodi, welcher an der besagten Mobilstation (MS) gespeichert ist, ausgewählt wird, oder wobei der besagte eine der besagten mindestens zwei Sendeleistungsmodi von einem Benutzer der besagten Mobilstation (MS) über eine Benutzerschnittstelle (MS-UI) der besagten Mobilstation (MS) ausgewählt wird.

3. Verfahren (MET1) nach Anspruch 2, wobei die besagte Mobilstation (MS) ein Teilnehmerkennungs-Modul (MS-SIM) umfasst, und wobei die besagte Benutzer-Vorauswahl an dem besagten Teilnehmerkennungs-Modul (MS-SIM) gespeichert wird.

4. Verfahren (MET1) nach Anspruch 2, wobei die besagte Mobilstation (MS) den besagten einen der besagten mindestens zwei Sendeleistungsmodi basierend auf einem Ladezustand einer Stromversorgungseinheit (MS-B) der besagten Mobilstation (MS) oder basierend auf einem Vergleich eines aktuellen Standorts der besagte Mobilstation (MS) mit einer Standortkarte, welche mindestens eine Vorauswahl der besagten mindestens zwei Sendeleistungsmodi für einen vordefinierten Bereich (HL) umfasst, auswählt.

5. Verfahren (MET2-1, MET2-2) nach Anspruch 4, wobei das besagte Verfahren (MET2-1, MET2) entweder die folgenden Schritte umfasst:

- Hinzufügen (M2/1), über die besagte Benutzerschnittstelle (MS-UI), einer weiteren Vorauswahl der besagten mindestens zwei Sendeleistungsmodi für einen weiteren vordefinierten Bereich, oder Löschen (M2/1), über die besagte Benutzerschnittstelle (MS-UI), einer der besagten Vorauswahlen, und
- Bereitstellen (M2/2), M2/3) von Informationen über die besagte hinzugefügte weitere Vorauswahl oder die besagte gelöschte eine der besagten Vorauswahlen an eine Datenbank (DB), und
- Aktualisieren (M2/4) der besagten Datenbank (DB) mit den besagten Informationen,

oder die folgenden Schritte umfasst:

- Bereitstellen (M2/10, M2/10-2, M2/11) von Informationen über eine aktuelle Position (POS-INFO) der besagten Mobilstation (MS) an die besagte Datenbank (DB), und
- Bereitstellen (M2/12, M2/13) von Informationen über mindestens eine Sendeleistungsmodus-Beschränkung (MODE-INFO) von der besagten Datenbank (DB) an einen Netzwerkknoten (NN, BS) eines Funkkommunikationssystems (RCS).

6. Verfahren (MET1) nach Anspruch 1, wobei der besagte Netzwerkknoten (NN, BS) den besagten ausgewählten der besagten mindestens zwei Sendeleistungsmodi basierend auf einem Standort der besagten Mobilstation (MS) innerhalb einer Funkzelle (RC) des besagten Funkkommunikationsnetzwerks (RCS) oder basierend auf einem Standort der besagten Mobilstation (MS) innerhalb eines Bereichs (HL), welcher als ein für elektromagnetische Strahlungen empfindlicher Bereich markiert oder nicht markiert ist, annimmt oder ablehnt.

7. Verfahren (MET1) nach Anspruch 6, wobei das besagte Verfahren (MET1) weiterhin die folgenden Schritte umfasst:

- Übertragen (M1/9) einer Anforderung (REQ) von dem besagten Netzwerkknoten (NN, BS) an eine Datenbank (DB) für die Übertragung von Informationen über mindestens eine Vorauswahl innerhalb einer vordefinierten Entfernung zu dem besagten aktuellen Standort der besagten Mobilstation (MS), und
- Übertragen (M1/11) der besagten Informationen (AREA-INFO1) von der besagten Datenbank (DB) an den besagten Netzwerkknoten (NN, BS),

und wobei der besagte Bereich (HL), welcher als für elektromagnetische Strahlungen empfindlicher Bereich markiert oder nicht markiert ist, eine der besagten in der besagten Datenbank (DB) gespeicherten Vorauswahlen ist.

8. Verfahren (MET1) nach einem beliebigen der vorstehenden Ansprüche 1, 6 oder 7, wobei das besagte Verfahren weiterhin den Schritt des Bereitstellens (M1/16) der besagten Entscheidungsinformationen (DEC-INFO) über eine Benutzerschnittstelle (MS-UI) an einen Benutzer der besagten Mobilstation (MS) umfasst.

9. Verfahren (MET1) nach Anspruch 1, wobei ein erster Sendeleistungsmodus der besagten mindestens zwei Sendeleistungsmodi einen ersten Satz von Leistungssteuerparametern mit einer ersten maximalen Sendeleistung umfasst, und wobei ein zweiter Sendeleistungsmodus der besagten mindestens zwei Sendeleistungsmodi einen zweiten Satz von Leistungssteuerparametern mit einer zweiten maximalen Sendeleistung, welche größer als die besagte erste maximale Sendeleistung ist, umfasst, und wobei der besagte erste Sendeleistungsmodus ein Eco-Modus für reduzierte elektromagnetische Strahlung ist, und wobei der besagte zweite Sendeleistungsmodus ein Hochleistungsmodus zur Maximierung eines Datendurchsatzes ist.

10. Verfahren (MET1) nach Anspruch 9, wobei die besagte zweite maximale Sendeleistung des besagten Hochleistungsmodus auf einen Wert eingestellt wird, welcher einen von einer Basisstation (BS) geforderten maximalen Sendeleistungspegel um 10 Prozent überschreitet.

**11.** Mobilstation (MS), umfassend:

- Mittel (MS-CPU, MS-PROG, MS-UI, MS-SIM) zum Auswählen eines von mindestens zwei Sendeleistungsmodi einer Funkzugangstechnologie für eine Übertragung von Funkfrequenzsignalen (RS) von der besagten Mobilstation (MS),
- Mittel (MS-AS, MS-TR) zum Übertragen von Auswahlinformationen (SEL-INFO) des besagten ausgewählten der besagten mindestens zwei Sendeleistungsmodi von der besagten Mobilstation (MS) an einen Netzwerkknoten (NN, BS) eines Funkkommunikationsnetzwerks (RCS),
- Mittel (MS-TR, MS-AS) zum Empfangen von Entscheidungsinformationen (DEC-INFO) vom besagten Netzwerkknoten (NN, BS) darüber, ob eine Auswahl des besagten ausgewählten der besagten mindestens zwei Sendeleistungsmodi angenommen oder abgelehnt wird, und
- Mittel (MS-TR, MS-AS) zum Übertragen der besagten Funkfrequenzsignale (RFS) unter Verwendung des besagten ausgewählten der besagten mindestens zwei Sendeleistungsmodi oder unter Verwendung eines weiteren Sendeleistungsmodus wie von dem besagten Netzwerkknoten (NN, BS) gefordert.

**12.** Mobilstation (MS) nach Anspruch 11, wobei die besagte Mobilstation (MS) weiterhin ein Teilnehmerkennungs-Modul (MS-SIM) umfasst, und wobei das besagte Teilnehmerkennungs-Modul (MS-SIM) Mittel (SIM-MEM) zum Speichern einer Benutzer-Vorauswahl für einen der besagten mindestens zwei Sendeleistungsmodi umfasst.

**13.** Netzwerkknoten (NN, BS) zur Verwendung in einem Funkkommunikationsnetzwerk (RCS), **dadurch gekennzeichnet, dass** der besagte Netzwerkknoten (NN, BS) umfasst:

- Mittel (NN-INT1, NN-TR1, NN-INT2, NN-TR2) zum Empfangen von Auswahlinformationen (SEL-INFO) eines ausgewählten von mindestens zwei Sendeleistungsmodi einer Funkzugangstechnologie für eine Übertragung von Funkfrequenzsignalen (RFS) von einer Mobilstation (MS), welche die Funkzugangstechnologie anwendet,
- Mittel (NN-CPU, NN-PROG) zum Annehmen oder Ablehnen des besagten einen der besagten mindestens zwei Sendeleistungsmodi, und
- Mittel (NN-INT2, NN-TR2) zum Übertragen von Entscheidungsinformationen (DEC-INFO) darüber, ob eine Auswahl des besagten ausgewählten der besagten mindestens zwei Sendeleistungsmodi angenommen oder abgelehnt wird, an die besagte Mobilstation (MS).

**14.** Netzwerkknoten (NN, BS) nach Anspruch 13, wobei der besagte Netzwerkknoten (NN, BS) eine Basisstation für einen Knoten eines zellularen Funkzugangsnetzwerks, ein Zugangspunkt für ein drahtloses lokales Netzwerk, ein Netzwerk-Controller, eine Mobilitätsverwaltungsentität oder ein Netzwerkknoten zur Bearbeitung von Benutzerprofilen ist.

**15.** Kommunikationsnetzwerk (RCS), welches einen Netzwerkknoten (NN, BS) gemäß Anspruch 13 und einen Anwendungsserver (APPS) umfasst, wobei der besagte Anwendungsserver (APPS) Mittel (APPS-MEM) zum Speichern einer Benutzer-Vorauswahl für einen von mindestens zwei Sendeleistungsmodi einer Funkzugangstechnologie für eine Übertragung von Funkfrequenzsignalen (RFS) von einer Mobilstation (MS) umfasst.


**Revendications**

**1.** Procédé (MET1) pour sélectionner un mode de puissance de transmission au niveau d'une station mobile (MS) pour une transmission de signaux de radiofréquence (RFS) à partir de ladite station mobile (MS) en utilisant une technologie d'accès radio, ledit procédé (MET1) comprenant les étapes suivantes :

- sélectionner (M1/5) au niveau de ladite station mobile (MS) un parmi au moins deux modes de puissance de transmission de ladite technologie d'accès radio pour ladite transmission,
- transmettre (M1/6) des informations de sélection (SEL-INFO) dudit mode sélectionné parmi lesdits au moins deux modes de puissance de transmission à partir de ladite station mobile (MS) vers un noeud de réseau (NN, BS) d'un réseau de radiocommunication (RCS),
- accepter ou rejeter (M1/13) au niveau dudit noeud de réseau (NN, BS) ledit mode sélectionné parmi lesdits au moins deux modes de puissance de transmission,
- transmettre (M1/14) des informations de décision (DEC-INFO) à partir dudit noeud de réseau (NN, BS) vers ladite station mobile (MS), qu'une sélection dudit mode sélectionné parmi lesdits au moins deux modes de puissance de transmission soit acceptée ou rejetée, et

- transmettre (M1/17) à partir de ladite station mobile (MS) lesdits signaux de radiofréquence (RFS) en utilisant ledit mode sélectionné parmi lesdits au moins deux modes de puissance de transmission ou en utilisant un autre mode de puissance de transmission comme l'exige ledit noeud de réseau (NN, BS).

2. Procédé (MET1) selon la revendication 1, dans lequel ledit mode parmi lesdits au moins deux modes de puissance de transmission est sélectionné par ladite station mobile (MS) par l'intermédiaire d'une pré-sélection par l'utilisateur dudit mode parmi lesdits au moins deux modes de puissance de transmission qui est stockée au niveau de ladite station mobile (MS) ou dans lequel ledit mode parmi lesdits au moins deux modes de puissance de transmission est sélectionné par un utilisateur de ladite station mobile (MS) par l'intermédiaire d'une interface utilisateur (MS-UI) de ladite station mobile (MS).

3. Procédé (MET1) selon la revendication 2, dans lequel ladite station mobile (MS) comprend un module d'identité d'abonné (MS-SIM) et dans lequel ladite pré-sélection par l'utilisateur est stockée au niveau dudit module d'identité d'abonné (MS-SIM).

4. Procédé (MET1) selon la revendication 2, dans lequel ladite station mobile (MS) sélectionne ledit mode parmi lesdits au moins deux modes de puissance de transmission sur la base d'une condition de charge d'un bloc d'alimentation (MS-B) de ladite station mobile (MS) ou sur la base d'une comparaison entre une localisation actuelle de ladite station mobile (MS) et une carte de localisation, qui comprend au moins une pré-sélection desdits au moins deux modes de puissance de transmission pour une zone prédéfinie (HL).

5. Procédé (MET2-1, MET2-2) selon la revendication 4, ledit procédé (MET2-1, MET2-2) comprenant les étapes suivantes :

- ajouter (M2/1) par l'intermédiaire de ladite interface utilisateur (MS-UI) une autre pré-sélection desdits au moins deux modes de puissance de transmission pour une autre zone pré-définie ou supprimer (M2/1) par l'intermédiaire de ladite interface utilisateur (MS-UI) une desdites pré-sélections, et
- fournir (M2/2, M2/3) des informations de ladite autre pré-sélection ajoutée ou de ladite pré-sélection supprimée parmi lesdites pré-sélections à une base de données (DB), et
- mettre à jour (M2/4) ladite base de données (DB) avec lesdites informations,

ou comprenant les étapes suivantes :

- fournir (M2/10, M2/10-2, M2/11) des informations d'une position actuelle (POS-INFO) de ladite station mobile (MS) à ladite base de données (DB), et
- fournir (M2/12, M2/13) des informations d'au moins une restriction du mode de puissance de transmission (MODE-INFO) à partir de ladite base de données (DB) vers un noeud de réseau (NN, BS) d'un système de radiocommunication (RCS).

6. Procédé (MET1) selon la revendication 1, dans lequel ledit noeud de réseau (NN, BS) accepte ou rejette ledit mode sélectionné parmi lesdits au moins deux modes de puissance de transmission sur la base d'une localisation de ladite station mobile (MS) dans une cellule radio (RC) dudit réseau de radiocommunication (RCS) ou sur la base d'une localisation de ladite station mobile (MS) dans une zone (HL) marquée ou non marquée en tant que zone sensible pour un rayonnement électromagnétique.

7. Procédé (MET1) selon la revendication 6, ledit procédé (MET1) comprenant en outre les étapes suivantes :

- transmettre (M1/9) une demande (REQ) à partir dudit noeud de réseau (NN, BS) vers ladite base de données (DB) pour transmettre des informations d'au moins une pré-sélection dans une distance prédéfinie à ladite localisation actuelle de ladite station mobile (MS), et
- transmettre (M1/11) à partir de ladite base de données (DB) vers ledit noeud de réseau (NN, BS) lesdites informations (AREA-INFO1),

et dans lequel ladite zone (HL) marquée ou non marquée en tant que zone sensible pour un rayonnement électromagnétique est une desdites pré-sélections stockées au niveau de ladite base de données (DB).

8. Procédé (MET1) selon l'une quelconque des revendications précédentes 1, 6 et 7, ledit procédé comprenant en outre l'étape consistant à fournir (M1/16) lesdites informations de décision (DEC-INFO) par l'intermédiaire d'une interface utilisateur (MS-UI) à un utilisateur de ladite station mobile (MS).

9. Procédé (MET1) selon la revendication 1, dans lequel un premier mode de puissance de transmission parmi lesdits au moins deux modes de puissance de transmission comprend un premier ensemble de paramètres de commande de puissance avec une première puissance de transmission maximale et dans lequel un deuxième mode de puissance de transmission parmi lesdits au moins deux modes de puissance de transmission comprend un deuxième ensemble de paramètres de commande de puissance avec une deuxième puissance de transmission maximale plus importante que ladite première puissance de transmission maximale et dans lequel ledit premier mode de puissance de transmission est un mode éco pour un rayonnement électromagnétique réduit et dans lequel ledit deuxième mode de puissance de transmission est un mode de haute performance pour optimiser un débit de données.

10. Procédé (MET1) selon la revendication 9, dans lequel ladite deuxième puissance de transmission maximale dudit mode de haute performance est réglée sur une valeur qui est 10 pour cent supérieure à un niveau de puissance de transmission maximale qui est demandé par une station de base (BS).

11. Station mobile (MS) comprenant :

   - des moyens (MS-CPU, MS-PROG, MS-UI, MS-SIM) pour sélectionner un parmi au moins deux modes de puissance de transmission d'une technologie d'accès radio pour une transmission de signaux de radiofréquence (RS) à partir de ladite station mobile (MS),
   - des moyens (MS-AS, MS-TR) pour transmettre des informations de sélection (SEL-INFO) dudit mode sélectionné parmi lesdits au moins deux modes de puissance de transmission à partir de ladite station mobile (MS) vers un noeud de réseau (NN, BS) d'un réseau de radiocommunication (RCS),
   - des moyens (MS-TR, MS-AS) pour recevoir des informations de décision (DEC-INFO) à partir dudit noeud de réseau (NN, BS), qu'une sélection dudit mode sélectionné parmi lesdits au moins deux modes de puissance de transmission soit acceptée ou rejetée, et
   - des moyens (MS-TR, MS-AS) pour transmettre lesdits signaux de radiofréquence (RFS) en utilisant ledit mode sélectionné parmi lesdits au moins deux modes de puissance de transmission ou en utilisant un autre mode de puissance de transmission comme l'exige ledit noeud de réseau (NN, BS).

12. Station mobile (MS) selon la revendication 11, ladite station mobile (MS) comprenant en outre un module d'identité d'abonné (MS-SIM) et ledit module d'identité d'abonné (MS-SIM) comprenant des moyens (SIM-MEM) pour stocker une pré-sélection par l'utilisateur pour un parmi lesdits au moins deux modes de puissance de transmission.

13. Noeud de réseau (NN, BS) à utiliser dans un réseau de radiocommunication (RCS), **caractérisé en ce que** ledit noeud de réseau (NN, BS) comprend :

   - des moyens (NN-INT1, NN-TR1, NN-INT2, NN-TR2) pour recevoir des informations de sélection (SEL-INFO) d'un mode sélectionné parmi au moins deux modes de puissance de transmission d'une technologie d'accès radio pour une transmission de signaux de radiofréquence (RFS) à partir d'une station mobile (MS) appliquant la technologie d'accès radio,
   - des moyens (NN-CPU, NN-PROG) pour accepter ou rejeter ledit mode sélectionné parmi lesdits au moins deux modes de puissance de transmission, et
   - des moyens (NN-INT2, NN-TR2) pour transmettre des informations de décision (DEC-INFO) à ladite station mobile (MS), qu'une sélection dudit mode sélectionné parmi lesdits au moins deux modes de puissance de transmission soit acceptée ou rejetée.

14. Noeud de réseau (NN, BS) selon la revendication 13, dans lequel ledit noeud de réseau (NN, BS) est une station de base pour un noeud de réseau cellulaire d'accès radio, un point d'accès pour un réseau local sans fil, un contrôleur de réseau, une entité de gestion de la mobilité ou un noeud de réseau pour gérer des profils utilisateurs.

15. Réseau de communication (RCS) comprenant un noeud de réseau (NN, BS) selon la revendication 13 et un serveur d'application (APPS), dans lequel ledit serveur d'application (APPS) comprend des moyens (APPS-MEM) pour stocker une pré-sélection par l'utilisateur pour un parmi au moins deux modes de puissance de transmission d'une technologie d'accès radio pour une transmission de signaux de radiofréquence (RFS) à partir d'une station mobile (MS).

FIG. 1

EP 2 615 867 B1

FIG. 2

MET2-1

MS
DB

M2/1

M2/2          ADD-INFO, EDIT-INFO, DEL-INFO          M2/3

M2/4

DL-REQ
M2/5                                                 M2/6

AREA-INFO2
M2/8                                                 M2/7

*a)*

MET2-2

MS                    NN                    DB

M2/10
                                    POS-INFO
M2/10-2                                              M2/11

                                    MODE-INFO
M2/13                                               M2/12

*b)*

*FIG. 3*

FIG. 4

NN

NN-INT1          NN-INT2

| NN-TR1 |          | NN-TR2 |

NN-CPU

NN-MEM          NN-PROG

*FIG. 5*

APPS

APPS-INT

APPS-TR

APPS-CPU

APPS-PROG

DB

APPS-MEM

FIG. 6

SIM-CT1    SIM-CT2

SIM-IC

SIM-MEM

SIM-BODY

EP 2 615 867 B1

*FIG. 7*

**EP 2 615 867 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6643517 B1